# EUROPÄISCHE PATENTSCHRIFT

(11) **EP 1 609 631 B1**
(45) Veröffentlichungstag und Bekanntmachung des Hinweises auf die Patenterteilung: **25.03.2009**
(21) Anmeldenummer: 05013567.2
(22) Anmeldetag: 23.06.2005
(51) Int. Cl.: B60G 3/20, B60G 7/02, B60G 21/055, B62D 21/00

(54) **Hinterradaufhängung für ein Personenkraftfahrzeug mit angetriebenen Hinterrädern**
Rear suspension for passenger vehicle with driven rear wheels
Suspension arrière pour automobile à roues arrières motrices

(30) Priorität: 24.06.2004 DE 102004030463
(43) Veröffentlichungstag der Anmeldung: 28.12.2005
(73) Patentinhaber: GM Global Technology Operations, Inc., Detroit, MI 48265-3000 (US)
(72) Erfinder: Denk, Peter, 64560 Riedstadt (DE); Hölzel, Hartmut, 65428 Rüsselsheim (DE)
(74) Vertreter: Daniel, Ulrich W.P.

(56) Entgegenhaltungen:
- EP-A- 0 277 650
- EP-A- 0 307 547
- EP-A- 0 519 825
- EP-A- 1 201 468
- DE-A1- 10 133 424
- JP-A- 2 249 712
- US-A- 4 444 415
- US-A- 4 744 586
- US-A- 4 930 804
- US-A- 5 560 651
- US-A- 5 833 026
- US-A- 5 851 016

## Beschreibung

Die vorliegende Erfindung betrifft eine Hinterradaufhängung für ein Personenkraftfahrzeug mit einem oberen und einem unteren Querlenker, einem quer angeordneten Kompensationslenker und einem Längslenker für die häufig auch als "4-Link Rear Suspension" bezeichnete Mehrfachanlenkung eines Hinterradträgers gegebenenfalls unter Zwischenschaltung eines Hilfsrahmens an einem Unterbau der Fahrzeugkarosserie, wobei, jeweils bezogen auf die Fahrtrichtung des Personenkraftfahrzeuges, der untere Querlenker hinter der Radachse des Radträgers liegt, der obere Querlenker in etwa oberhalb der Radachse vor dem unteren Querlenker liegt, und mit einer Karosserieabstützung, bestehend aus einer Feder und einem Dämpfer, nach dem Oberbegriff des Anspruchs 1, sowie eine Vierlenker-Hinterachse mit angetriebenen Hinterrädern mit einer solchen Hinterradaufhängung nach Anspruch 12.

Eine erste allgemeine Ausführungsform einer Hinterradaufhängung ist in der EP 0 277 650 A2 beschrieben. Dämpfer und Feder bilden eine Baueinheit, die sich am hinteren unteren Querlenker abstützen. Die inneren Enden des oberen Querlenkers und des Kompensationslenkers sind an einem elastisch am Fahrzeugaufbau gelagerten Fahrschemel gelagert, zu dem keine näheren Angaben der EP 0 277 650 A2 zu entnehmen sind.

Ein weiteres Beispiel einer Hinterradaufhängung ist in der US-A-4 444 415 offenbart, welche als nächstliegende Stand der Technik angesehen werden kann.

Eine weitere allgemeine Ausführungsform einer Hinterradaufhängung ist aus der DE 34 34 790 A1 bekannt geworden. Die Karosserieabstützung erfolgte dabei mittels eines Feder-Dämpferbeins, also einer Kombination aus einem Dämpfer und einer Feder, wobei die untere Abstützung der Feder am Außenrohr des Dämpfers erfolgt. Dabei ragt das Feder-Dämpferbein sehr hoch auf, so dass hierfür ein Einbauraum zur Verfügung gestellt werden muss, der dem Laderaum des Kraftfahrzeuges verloren geht. Zudem befindet sich das Feder-Dämpferbein nahe der Schwenkachse, um die der Achsträger beziehungsweise Radträger beim Einfedern in Bezug zur Karosserie verschwenkt wird. Dies bedingt insbesondere für die Feder eine schlechte Kraft- beziehungsweise Wegübersetzung.

Demgegenüber sollte die in der EP 0 963 304 B1 beschriebene Hinterradaufhängung bzw. "4-Link Rear Suspension" der ersten Generation derselben Annmelderin günstigere fahrdynamische Werte aufweisen. Ferner sollte die Hinterradaufhängung der EP 0 963 304 B1 so kompakt und flach bauen, dass der Laderaum des Kraftfahrzeuges einen möglichst tiefen Boden aufweist und eine große seitliche Ausdehnung besitzt. Des weiteren sollte Platz für zusätzliche Aggregate unterhalb des Ladebodens, insbesondere für einen Fahrzeugtank, geschaffen werden. Diese Anforderungen wurden mit der Hinterradaufhängung derselben Anmelderin gemäß der EP 0 963 304 B1 erfolgreich bewältigt. Diese Hinterradaufhängung hat sich vielfach bewährt. Allerdings weist diese Hinterradaufhängung aus heutiger Sicht den Nachteil auf, dass die Hinterräder nicht angetrieben werden können.

Dementsprechend ist es Aufgabe der vorliegenden Erfindung, unter Vermeidung der vorstehend diskutierten Nachteile, die aus der EP 0 963 304 B1 bekannte, nichtantreibbare Hinterradaufhängung der selben Anmelderin für ein Personenkraftfahrzeug derart zu verbessern, dass ein Antreiben der Hinterräder ermöglicht ist, ohne dabei auf die bislang damit erzielbaren günstigen, fahrdynamische Werte verzichten zu müssen, wobei die antreibbare Weiterentwicklung auch weiterhin so kompakt bauen soll, dass der Laderaum des Personenkraftfahrzeuges einen möglichst tiefen Boden aufweist und eine große seitliche Ausdehnung besitzt.

Diese Aufgabe wird gelöst durch die Merkmale des Anspruchs 1 wie auch durch die Merkmale des Anspruchs 12.

Dabei wird eine Hinterradaufhängung für ein Personenkraftfahrzeug mit einem oberen und einem unteren Querlenker, einem quer angeordneten Kompensationslenker und einem Längslenker für die Mehrfachanlenkung eines Hinterradträgers gegebenenfalls unter Zwischenschaltung eines Hilfsrahmens an einem Unterbau der Fahrzeugkarosserie vorgeschlagen. Hierbei liegt, jeweils bezogen auf die Fahrtrichtung des Personenkraftfahrzeuges, der untere Querlenker hinter der Radachse des Radträgers und der obere Querlenker in etwa oberhalb der Radachse vor dem unteren Querlenker. Weiterhin weist diese Hinterradaufhängung eine Karosserieabstützung bestehend aus einer Feder und einem Dämpfer auf, wobei die Feder am unteren Querlenker abgestützt ist und wobei der Kompensationslenker in Fahrtrichtung vor dem Dämpfer liegt. Dabei sind die Querlenker und der Kompensationslenker an einem Hilfsrahmen angelenkt, wobei sich der Hilfsrahmen, vorzugsweise mit wenigstens vier Stützstellen, gegen den Unterbau der Fahrzeugkarosserie abstützt.

Dabei ist erstmals vorgesehen, dass die Räder der Hinterachse in der Weise antreibbar sind, dass hierfür jeweils ein Hinterrad-Antriebswellenabschnitt ausgehend von einem Differential zwischen dem oberen und unteren Querlenker verlaufend zum jeweiligen linken bzw. rechten Hinterrad führt. Hierbei soll der obere Querlenker oberhalb vor der Radachse liegen, und sich der Dämpfer gegen den unteren hinteren Querlenker abstützt, um auf diese Weise ausreichend frei verfügbaren Bauraum bereitstellen zu können, damit ein permanentes Antreiben der Hinterräder in jeder Fahrsituation, also von einem voll eingefederten bis hin zu einem gänzlich ausgefederten Zustand der Radaufhängung bzw. Karosserie.

Damit ist es erstmals in vorteilhafter Weise möglich, die Vorteile der aus der EP 0 963 304 B1 bekannten nichtantreibbaren Hinterachse derselben Anmelderin erstmalig als antreibbare Hinterachse zu verwenden. Diese bietet den Vorteil, dass mit der erfindungsgemäßen antreibbaren Hinterachse nun anstatt der bislang genutzten Frontantriebe erstmals auch Heckantriebe und/oder sogenannte Vierradantriebe realisierbar sind, insbesondere können damit auch größere bzw. schwerere hinterradgetriebene Limousinen und Kombis realisiert werden.

Hierbei kann die angetriebene Vierlenker-Hinterachse als komplettes Modul vorgefertigt zur Linie angeliefert und dort mit der Fahrzeugkarosserie verheiratet bzw. am Kraftfahrzeugunterbau montiert werden. Dabei sind die beiden Längslenker sowie das Hinterachsgetriebe in vorteilhafter Weise mit in den Hilfsträger beziehungsweise in den Fahrschemel eingebunden. Dies ergibt eine wesentliche Kostenersparnis
bei der Montage des so aufgebauten kompletten Hinterachsmoduls auf Grund der wesentlich vereinfachten Verschraubung des Fahrschemels gegenüber der Fahrzeugkarosserie beziehungsweise deren Unterbau. Zur Montage des kompletten Hinterachsmoduls ist es lediglich erforderlich, den Fahrschemel beziehungsweise Hilfsträger mit seinen vier Stützstellen gegen den Unterbau der Fahrzeugkarosserie an den in der dortigen Struktur bereits befindlichen Montagepunkten zu befestigen.

Darüber hinaus können in vorteilhafter Weise damit zusätzliche verschraubte Halter-Längslenker am Unterbau entfallen. Dies hilft nicht nur die Herstellungskosten zu reduzieren, sondern verringert zugleich die Teilevielfalt, vereinfacht die Teilelagerung und bringt auf diese Weise weitere Kosteneinsparungseffekte.

Ferner wird erstmals eine mit der hier diskutierten Hinterradaufhängung ausgestattete erfindungsgemäße Vierlenker-Hinterachse mit angetriebenen Hinterrädern vorgeschlagen, welche in synergetischer Weise die selben Vorteile bietet, wie diese zur Hinterradaufhängung diskutiert sind.

Vorteilhafte Weiterbildungen der Erfindung ergeben sich aus den Merkmalen der Unteransprüche.

So wird in einer bevorzugten Ausführungsform der Hinterradaufhängung vorgesehen, dass als Feder eine zylindrische Feder mit linearer Federcharakteristik eingesetzt ist. Eine zylindrische Feder baut in vorteilhafter Weise gegenüber einer kurzen Tonnenfeder mit progressiver Federcharakteristik (Miniblockfeder) wesentlich schlanker und schafft damit in deren direkter Umgebung zusätzlichen freien Bauraum, also weiteren Freiraum beispielsweise auch für die komplexe Hubschwenkbewegung der vom Differential zu den Hinterrädern führenden Hinterrad-Antriebswellenabschnitte wie auch für die beiden Querlenker beim Aus- und Einfedern des Fahrzeugs.

In einer weiter bevorzugten Ausführungsform der Hinterradaufhängung ist vorgesehen, dass das untere Befestigungsauge des Dämpfers unmittelbar am unteren Querlenker gelagert ist. Damit entsteht eine möglichst platzsparende Anbindung. Zugleich erfolgt ein direkter Krafteintrag. Damit kann neben einer guten Abstimmung von Dämpfer und Feder zugleich ein gutes Kräfteverhältnis eingestellt werden.

Entsprechend einer weiter bevorzugten Ausführungsform wird vorgeschlagen, dass der Dämpfer innerhalb der Feder angeordnet ist. Diese Bauweise ist besonders platzsparend und kompakt. Damit wird in vorteilhafter Weise vermieden, dass der Laderaum, falls sein Boden unterhalb des oberen Anlenkpunktes des Dämpfers verläuft, eventuell doch geringfügig seitlich eingeschränkt werden muss; idealerweise braucht dieser gar nicht eingeschränkt zu werden.

Durch die gewählte Anordnung wird einerseits ausreichend großer Einbauraum für die Feder wie auch für den Dämpfer geschaffen. Gleichzeitig verbleibt andererseits genügend Einbauraum, um den Bremssattel einer Scheibenbremse beispielsweise im hinteren Winkelbereich des Radträgers befestigen zu können.

Ferner hat die gewählte Anordnung den weiteren Vorteil, dass die Wegübersetzung für die Feder möglichst nahe eins gehalten werden kann.

Indem der untere Anlenkpunkt des Dämpfers wie auch der Feder unmittelbar am hinteren unteren Querlenker ansetzt, ist sichergestellt, dass auch der obere Anlenkpunkt des Dämpfers wie auch der Feder möglichst niedrig relativ zur Fahrzeughöhe betrachtet angeordnet werden kann, so dass ein bis zum Radgehäuse durchgehender breiter Laderaumboden der zugleich tief hinunter gelegt werden kann, möglich wird.

Dabei wird zugleich berücksichtigt, dass es für die Kinematik der Radaufhängung von Vorteil ist, wenn sich der untere Querlenker hinter der Drehachse im Radträger und der obere Querlenker in etwa oberhalb der Drehachse im Radträger befindet. Auf diese Weise lässt sich z.B. die Lage der virtuellen Momentanachse oder das Wankzentrum besser den jeweiligen Gegebenheiten des Fahrzeuges anpassen.

Wie bereits vorstehend erwähnt, bietet die beschriebene Anordnung der Radaufhängung am Hilfsrahmen beziehungsweise Fahrschemel den großen Vorteil, dass die Radaufhängung weitgehend vormontiert und zusammen mit dem Hilfsrahmen an der Karosserie befestigt werden kann.

In einer weiter bevorzugten Ausführungsform ist vorgesehen, dass ein Puffer bzw. ein Anschlagpuffer auf dem Dämpfer angeordnet ist. Dies bietet den Vorteil, dass damit auf die Federcharakteristik positiv Einfluß genommen werden kann. So kann beispielsweise die lineare Federcharakteristik einer zylindrischen Feder um einen progressiven Anteil mittels des auf dem Dämpfer angeordneten Puffers ausgeglichen oder ergänzt werden.

Dabei kann der Puffer im unteren Federsitz angeordnet sein, wenn dieser relativ kurz baut und mit einer hohen Federrate einsetzt. Allerdings ist dann das Einsetzen des Puffers eventuell vom Fahrgast im Fond schwach wahrnehmbar, so dass dem Puffer dann lediglich die Funktion einer Radwegbegrenzung übertragen werden sollte, d.h. er würde erst bei einem hohen Einfederweg einsetzen. Eine Progression der Achsrate, die gewünscht ist, um einem beladungsbedingten Absinken der Aufbaueigenfrequenz entgegen zu wirken, müßte dann mit einer Miniblockfeder erzielt werden. Sofern man statt der Miniblockfeder eine zylindrische Feder einbauen möchte, um neben anderen Vorteilen u.a. zusätzlichen Bauraum zu gewinnen, kann die Progression der Achsrate durch einen mittragenden Puffer erzielt werden, der bereits bei einer mittleren Einfederposition mit einer geringen Anfangsrate einsetzt. Um eine gewünschte Progression über einen größeren Radwegbereich hinweg zu erzielen und zugleich einen weichen Puffereinsatz zu realisieren, kann der Puffer deutlich länger gestaltet werden und in vorteilhafter Weise durch die Dämpferstange geführt werden.

Dabei ist es weiterhin möglich, ein herkömmliches Dämpferlager, ein Gummilager, einen sogenannten "Shear Mount", oder dergleichen vorzusehen.

Ferner ist vorgesehen, dass der Längslenker im Bereich eines Unterbaubefestigungspunktes des Hilfsrahmens gegen den Hilfsrahmen oder gegen den Unterbau abgestützt ist. Hierbei ist ferner vorgesehen, dass der Längslenker über ein sogenanntes "A-bushing" am Hilfsrahmen oder alternativ unmittelbar am Unterbau des Fahrzeugs angelenkt ist. Dies bietet den Vorteil einer wesentlich besseren Geräuschunterdrückung. Insbesondere Fahrgäste im Fond erhalten damit einen verbesserten Fahrkomfort. Zudem ist sichergestellt, dass die häufig bei älteren Kraftfahrzeugmodellen bemängelten Hinterachs-Fahrgeräusche unterbunden bleiben.

Ferner ist vorgesehen, dass der Längslenker als Rohrlängslenker ausgebildet ist. Dies bietet eine besonders preisgünstige Herstellung.

Entsprechend einer weiter bevorzugten Ausführungsform ist vorgesehen, dass die hilfsrahmenseitige Anlenkung des Kompensationslenkers unterhalb des vorderen Befestigungspunktes des Hilfsrahmens liegt. Damit können die fahrdynamischen Eigenschaften weiter verbessert werden.

Ferner ist vorgesehen, dass ein vor den oberen Querlenkern und in seinem mittleren Bereich vor den Kompensationslenkern verlaufender Stabilisator an seinen Enden jeweils mit den oberen Querlenkern pendelnd verbunden ist. Dies ermöglicht eine weitere Verbesserung und Feinabstimmung der fahrdynamischen Eigenschaften dieser angetriebenen Hinterachse. Der Stabilisator kann aber auch unmittelbar jeweils am Radträger angelenkt sein, je nach baulichen Gegebenheiten, gewünschtem Komfort und fahrdynamischen Erfordernissen.

Entsprechend einer weiter bevorzugten Ausführungsform ist vorgesehen, dass der Hilfsrahmen als Rohrrahmen aufgebaut ist. Damit kann massiv Gewicht eingespart werden. Diese leichte Bauweise ist mit preiswerteren Materialien durchführbar. Damit werden weitere Kosteneinsparungseffekte realisierbar, die sich letztlich in einem Preisvorteil für den Kunden niederschlagen.

Wie bereits vorstehend diskutiert, lässt sich der Längslenker in zwei Varianten ausführen. Die eine Variante betrifft die bekannten herkömmlichen sogenannten "Schwertlenker" mit einer starren Verbindung mit dem Radträger. Dabei ist der schwertförmige Längslenker durch seine Formgebung in sich ausreichend flexibel ausgebildet. Alternativ kann der Längslenker als Rohrkonstruktion ausgeführt und mit Gummibuchsen am Radträger befestigt werden. Die gewünschte Flexibilität wird über die Anbindung mit Gummibuchsen am Radträger erzielt. Der Längslenker im Rohrdesign bietet nicht nur konstruktive Vorteile im Blick auf Kosteneinsparungseffekte, sondern er bietet auch konstruktive Vorteile mit Blick auf das Packaging. Denn das Rohrdesign verbraucht besonders wenig Bauraum, so dass Restbauräume verbleiben, um weitere Komponenten am Unterbau unterbringen zu können.

Die vorstehend diskutierte erstmals vorgeschlagene erfindungsgemäße Hinterradaufhängung ist für einen Heckantrieb wie auch für einen Allradantrieb geeignet. Das vorgesehene A-bushing und die weiteren Isolationen gegenüber dem Unterbau beziehungsweise der Fahrzeugstruktur bringen eine wesentlich verbesserte Geräuschdämpfung und damit einen wesentlich gesteigerten Fahrkomfort der Fahrgäste. Die Anordnung der Dämpfer auf dem Federlenker bzw. dem hinteren Querlenker bietet nicht nur ein verbessertes Übersetzungsverhältnis des Dämpfers, sondern auch eine bessere Abstimmung von Feder und Dämpfer sowie eine verbesserte Kraft- bzw. Wegübersetzung.

Insgesamt bietet die erfindungsgemäße Hinterradaufhängung den großen Vorteil, dass es erstmals möglich ist, ausreichend Bauraum und Platz für einen Antriebsstrang zum Antreiben der Hinterräder zu schaffen, ohne dabei irgendwelche Einbußen bezüglich der Größe und Tiefe des Laderaums als auch dessen Durchladebreite hinnehmen zu müssen oder irgendwelche Nachteile bezüglich der fahrdynamischen Eigenschaften oder des Fahrkomforts zu erleiden.

Darüber hinaus bietet der als Rohrfahrschemel ausgebildete Hilfsrahmen den weiteren Vorteil, dass er wesentlich leichter baut, was zu Gewichtseinsparungen führt und sich letztendlich u. a. auch in einem reduzierten Kraftstoffverbrauch bemerkbar macht.

Dabei können anfallende Bremsmomente auch weiterhin über die Längslenker abgestützt werden, welche ihrerseits auf Grund des Rohrdesigns besonders leicht und dennoch überraschend stabil bauen.

Darüber hinaus bietet die vorstehend diskutierte Hinterradaufhängung den großen Vorteil, dass sie unmittelbar in einer der bestehenden Produktionslinien der Anmelderin Verwendung finden kann, und damit u. a. eine nachträgliche Umrüstung von bislang frontgetriebenen Fahrzeugen mit der älteren nicht angetriebenen Hinterachse durch Ersatz mit der neuen antreibbaren Hinterachse zu sogenannten allradgetriebenen Fahrzeugen durchgeführt werden kann, ohne hierfür nennenswerte Änderungen an der Struktur des Unterbaus vornehmen zu müssen.

Schließlich konnte in ersten internen Versuchen der Anmelderin festgestellt werden, dass bei einem mit der erfindungsgemäßen Hinterradaufhängung ausgerüsteten Kraftfahrzeug das sogenannte "On Center Feeling" verbessert werden kann. Ferner ist das Grabengefühl ebenfalls besser beurteilt worden. Das Lenkgefühl vermittelt wesentlich mehr Fahrbahnkontakt. Ein früher beklagtes Untersteuern ist leicht abgebaut. Schließlich wird die erfindungsgemäße Hinterradaufhängung in der Komfortbeurteilung sowie im Abrollgeräusch als auch beim Abrollkomfort besser beurteilt als die herkömmlichen Hinterradaufhängungen.

Dabei wurde die erstmals angetriebene Vierlenker-Hinterachse in keinem Beurteilungskriterium schlechter beurteilt, als das mitgeführte Vergleichsfahrzeug mit der herkömmlichen "Epsilon 3200 nichtantreibbaren Hinterachse". Als mögliche Begründung für das wesentlich verbesserte "On Center Feeling" wird an die statische Geometrieeinstellung gedacht, sowie an die vertikale Vorspuränderungskurve bei parallelem Einfedern, was weitere Vorteile dieser verbesserten Hinterradaufhängung sind.

Die vorstehend diskutierte Erfindung wird nachfolgend in Ausführungsbeispielen anhand der Figuren der Zeichnung näher erläutert. Es zeigt:
- Fig. 1: eine erste beispielhafte Ausführungsform einer Hinterachse mit als Rohrlenker ausgebildeten Längslenkern und einem Fahrschemel bzw. Achsquerträger aus Blechprägeteilen;
- Fig. 2: eine zweite beispielhafte Ausführungsform einer Hinterachse mit als Rohrlenker ausgebildeten Längslenkern und einem gewichtsoptimierten Fahrschemel bzw. Achsquerträger in Rohrausführung;
- Fig. 3: in einem schematischen Teilausschnitt den in Fig. 1 und 2 gezeigten Radträger mit als Rohrlenker ausgebildetem Längslenker;
- Fig. 4: in einem schematischen Teilausschnitt den in Fig. 1 und 2 gezeigten Radträger mit als Schwertlenker ausgebildetem Längslenker.

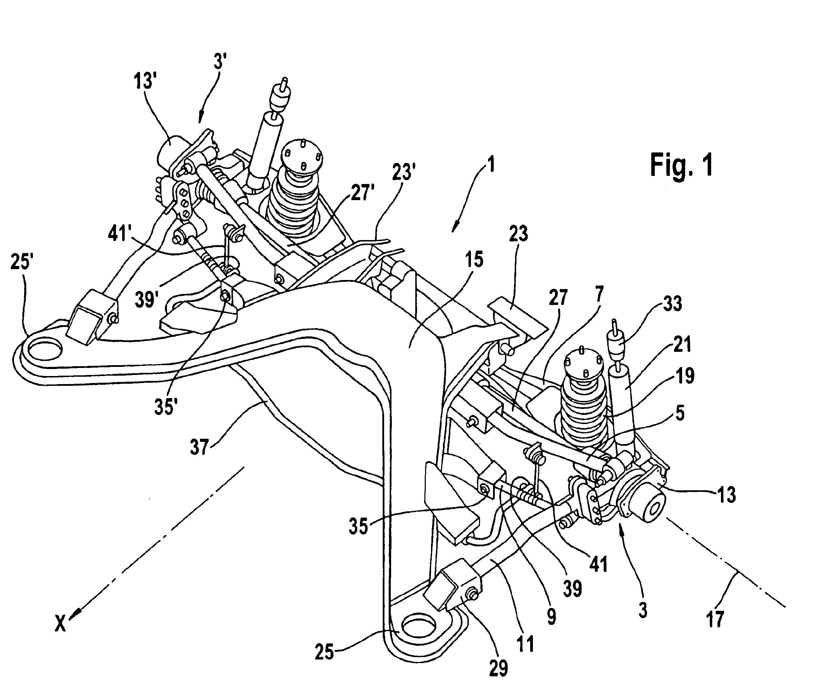

In Fig. 1 ist eine erste beispielhafte Ausführungsform einer Hinterachse (1) mit einer Hinterradaufhängung (3, 3') für ein Personenkraftfahrzeug gezeigt. Die Hinterradaufhängung (3, 3') verfügt links bzw. rechts jeweils über einen oberen Querlenker (5) und einen unteren Querlenker (7). Ferner weist die Hinterradaufhängung (3, 3') jeweils links bzw. rechts einen quer angeordneten Kompensationslenker (9) auf. Schließlich verfügt die Hinterradaufhängung (3) über einen Längslenker (11). Damit wird eine Mehrfachanlenkung eines Hinterradträgers (13) realisiert, gegebenenfalls unter Zwischenschaltung eines Hilfsrahmens (15), der an einem nicht näher dargestellten Unterbau der Fahrzeugkarosserie montiert ist.

Dabei ist jeweils bezogen auf die Fahrtrichtung X des Personenkraftfahrzeuges der untere Querlenker (7) hinter der Radachse (17) des Radträgers (13) orientiert. Ferner liegt der obere Querlenker (5) in etwa oberhalb der Radachse (17) vor dem unteren Querlenker (7). Die Hinterradaufhängung (3, 3') weist ferner eine Karosserieabstützung auf, die eine Feder (19) und einen Dämpfer (21) umfasst. Die Feder (19) ist dabei am unteren Querlenker (7) abgestützt. Ferner liegt der Kompensationslenker (9) in Fahrtrichtung X vor dem Dämpfer (21). Dabei sind die Querlenker (5, 7) sowie der Kompensationslenker (9) an dem Hilfsrahmen (15) angelenkt. Der Hilfsrahmen (15) stützt sich seinerseits gegen den hier nicht mehr dargestellten Unterbau der Fahrzeugkarosserie ab, wobei bevorzugt vier Stützstellen (23, 23', 25 und 25') verwendet werden.

Die nicht näher dargestellten Räder der Hinterachse (1) sind in der Weise antreibbar, dass hierfür jeweils links bzw. rechts ein Hinterrad-Antriebswellenabschnitt (27, 27') ausgehend von einem nicht näher dargestellten Differential zwischen dem oberen und unteren Querlenker (5, 7) verlaufend zum jeweiligen nicht näher dargestellten Hinterrad führen. Dabei liegt der obere Querlenker (5) oberhalb vor der gedachten Radachse (17). Ferner ist der Dämpfer (21) gegen den unteren hinteren Querlenker (7) abgestützt.

Damit wird ausreichend Bauraum für den Antriebswellenabschnitt (27 bzw. 27') sowie weiterer evtl. zugeordneter Bauteile geschaffen, ohne zugleich Einbußen beim erzielbaren Stauraumvolumen überhalb der Hinterachse (1) hinnehmen zu müssen, wobei zugleich gewährleistet bleibt, dass die gewohnten guten fahrdynamischen und kinematischen Eigenschaften der Hinterachse (1) erhalten bleiben und darüber hinaus nicht nur ausreichend Bauraum für den Antriebswellenabschnitt (27 bzw. 27') und das Differential sowie den Antriebsstrang, etc. zur Verfügung gestellt wird, sondern auch ausreichend Bewegungsfreiraum für den Antriebswellenabschnitt (27, 27') vorhanden ist, um in einer entsprechenden Schwenkbewegung den relativ zum Fahrzeug ein- und ausfedernden Hinterrädern je nach Fahrzustand folgen zu können.

Bei der hier dargestellten Ausführungsform einer Hinterachse (1) ist der Längslenker (11) als Rohrlenker ausgebildet. Der Fahrschemel beziehungsweise Hilfsrahmen (15) wiederum ist aus Blechprägeteilen hergestellt. Er kann aber auch anderweitig aufgebaut sein. Dabei ist der als Rohrlängslenker ausgebildete Längslenker (11) über ein sogenanntes "A- bushing" (29) am Hilfsrahmen (15) angelenkt. Bei der hier dargestellten Ausführungsform einer Hinterachse (1) ist der Längslenker (11) im Bereich des Unterbaubefestigungspunktes (25) des Hilfsrahmens (15) gegen den Hilfsrahmen (15) abgestützt. Der Längslenker (11) kann aber auch unmittelbar gegen den Unterbau des Fahrzeugs abgestützt sein. Dabei wird in Verbindung mit dem "A- bushing" (29) eine verbesserte bzw. zum Teil doppelte Schall- und Vibrationsdämmung der Hinterachse (1) gegenüber der nicht näher dargestellten Fahrzeugstruktur erzielt, was den Fahrkomfort deutlich verbessert und oftmals als "Poltern" empfundene Geräusche der Hinterachse (1) unterbindet.

Die Feder (19) ist als zylindrische Feder mit linearer Federcharakteristik ausgebildet. Der Dämpfer (21) ist parallel zur Feder (19) angeordnet. Der Dämpfer (21) könnte aber auch innerhalb der Feder (19) angeordnet sein. Das untere Befestigungsauge (31) des Dämpfers (21) ist unmittelbar am unteren Querlenker (7) gelagert. Auf dem Dämpfer (21) ist ein Puffer (33) angeordnet.

Die hilfsrahmenseitige Anlenkung (35 bzw. 35') des Kompensationslenkers (9) liegt unterhalb des vorderen Befestigungspunktes (25, bzw. 25') des Hilfsrahmens (15). Dabei verläuft ein Stabilisator (37) quer zur Fahrzeugrichtung X vor den oberen Querlenkern (5) und in seinem mittleren Bereich auch vor den Kompensationslenkern (9), wobei der Stabilisator (37) an seinen Enden (39, 39') jeweils mit dem oberen Querlenker (5) über eine Pendelstütze (41, 41') pendelnd verbunden ist.

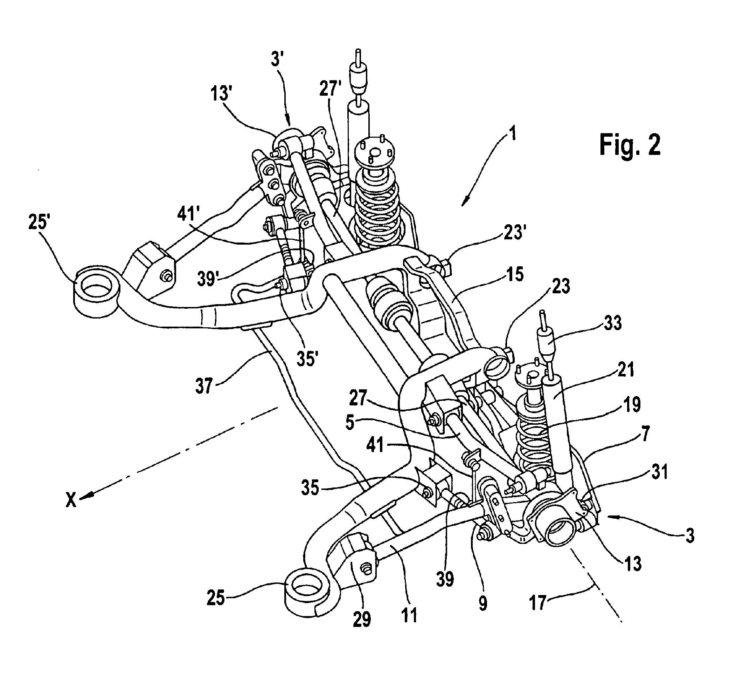

Eine weitere beispielhafte Ausführungsform einer Hinterachse (1) mit als Rohrlenker ausgebildeten Längslenkern (11) und einem gewichtsoptimierten Fahrschemel (15) beziehungsweise einem gewichtsoptimierten Achsquerträger bzw. Hilfsrahmen (15) in Rohrausführung ist in Fig. 2 näher dargestellt. Auch bei der in Fig. 2 dargestellten Ausführungsform besteht die Hinterradaufhängung (3, 3') der Hinterachse (1) aus einem unteren Querlenker (7), einem oberen Querlenker (5) sowie einem quer angeordneten Kompensationslenker (9) und einem Längslenker (11), der in der hier dargestellten Ausführungsform als Rohrlängslenker ausgebildet ist. Die drei quer angeordneten Lenker (5, 7 und 9) erstrecken sich in etwa parallel zueinander und im Ruhezustand in etwa parallel zur Fahrzeughorizontalen.

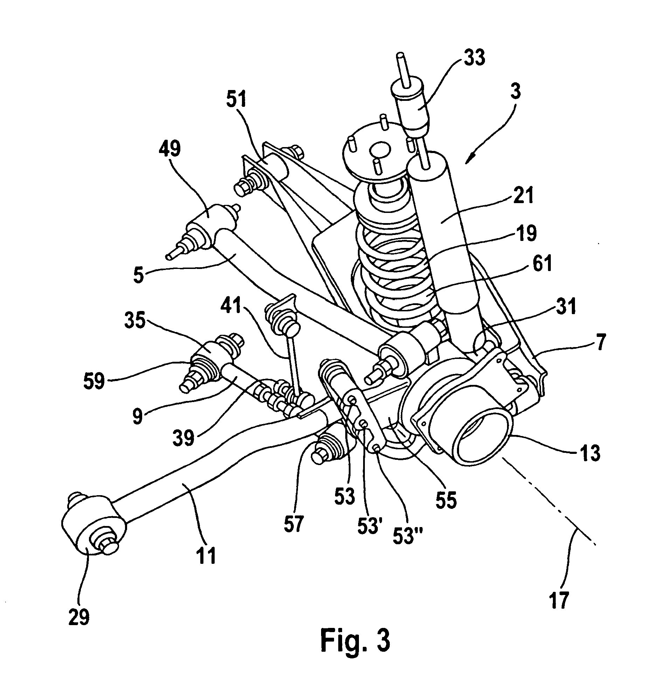

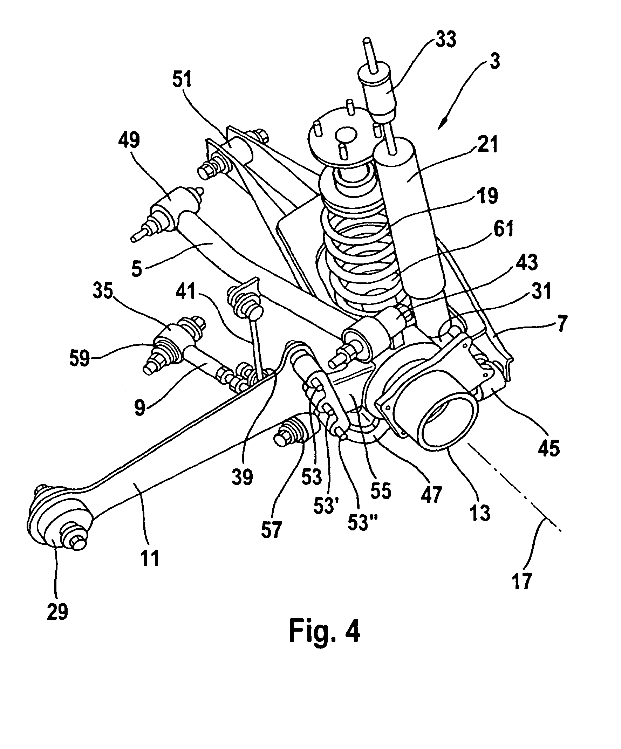

Die in Fig. 3 und 4 besser veranschaulichten Anlenkpunkte (43, 45 und 47) des oberen Querlenkers (5), des unteren Querlenkers (7) und des Kompensationslenkers (9) am Hinterradträger beziehungsweise Achsträger (13) bilden in einer in etwa senkrecht zur Radachse (17) verlaufenden Ebene in etwa ein gleichschenkliges Dreieck aus, wobei die Anlenkung (43) des oberen Querlenkers (5) in etwa oberhalb der Radachse (17) und die Anlenkungen (45 und 47) des unteren Querlenkers (7) und des Kompensationslenkers (9) unterhalb zu beiden Seiten der Radachse (17) des Achsträgers (13) vorgesehen sind.

Karosserieseitig sind die Querlenker (5 und 7), wie auch der Kompensationslenker (9) über die Anlenkpunkte (49, 51 und 35) am Hilfsrahmen (15) befestigt. Der Hilfsrahmen (15) ist, wie dies aus Fig. 1 und 2 bereits ersichtlich ist, über die vier Befestigungspunkte (23, 23', 25 und 25'), je zwei auf jeder Fahrzeugseite, am hier nicht näher dargestellten Unterbau des Kraftfahrzeuges angelenkt bzw. gegen diesen abgestützt.

Der untere und der obere Querlenker (7, 5) werden beidseitig jeweils in längs zur Fahrzeuglängsachse X ausgerichteten Dämpfungsbuchsen gelagert. Das gummiartige Material in den Buchsen gewährleistet zum einen eine gute Körperschallisolierung und zum anderen eine gewisse Nachgiebigkeit der Anlenkung, so dass ein Verschwenken des Achsträgers bzw. Hinterradträgers (13) durch eine Raumkurve erfolgen kann, deren Lage in Bezug zur hier nicht näher dargestellten Karosserie insbesondere vom Kompensationslenker (9) und dem Längslenker (11) im Zusammenwirken mit den Querlenkern (5 und 7) bestimmt wird.

Bei dem in Fig. 4 in einem schematischen Teilausschnitt der in Fig. 1 und 2 gezeichneten Radträger (13, 13') als Schwertlenker dargestellten Längslenker (11) besteht dieser beispielsweise aus einem schwertähnlichen, verbindungsweichen Blech, das vertikal zum nicht näher dargestellten Fahrzeug ausgerichtet ist und damit Verbiegungen in der Horizontalebene, aber nicht in der Vertikalebene zulässt.

Der als Schwertlenker ausgebildete Längslenker (11) in Fig. 4 wie auch der als Rohrlenker ausgebildete Längslenker (11) gemäß Fig. 3 ist jeweils in beiden hier dargestellten Ausführungsvarianten beispielsweise über drei Anlenkungspunkte (53, 53' und 53'') über eine am Radträger (13) angesetzte oder angeformte Schulter (55) mit dem Radträger (13) verbunden. Der Längslenker (11), sei es als Rohrlängslenker oder als Schwertlängslenker, hat insbesondere die Aufgabe, den Vorlauf des hier nicht näher dargestellten Hinterrades beim Einfedern zu kontrollieren. Der Längslenker (11) ist dabei fest mit dem Radträger (13) in der vorgenannten Weise verbunden und senkrecht zur Fahrzeuglängsachse X verschwenkbar unmittelbar an der Karosserie oder mittelbar an dieser über den Hilfsrahmen (15) angelenkt. Dabei sind in Fig. 1 und 2 die Variante mit einer Anlenkung am Hilfsrahmen (15) dargestellt, wobei zudem ein "A-bushing" (29) im Bereich des Befestigungspunktes (25) integriert ist.

Neben der Definition der Raderhebungskurve in der Seitenansicht oder des Schrägfederungswinkels der Hinterräder beim Einfedern übernimmt der Längslenker (11) erforderlichenfalls beim Bremsen auch Bremsreaktionskräfte und -momente.

Dem Vorspur- bzw. Kompensationslenker (9) wiederum kann u. a. die Aufgabe zugerechnet werden, den Vorspurverlauf beim Einfedern zu kontrollieren. Hierfür kann der Kompensationslenker (9) beispielsweise radträgerseitig in einem Kugelgelenk (57) und hilfsrahmenseitig in einer Dämpfungsbuchse (59) gelagert sein. Weiterhin kann man dem oberen Querlenker (5) beispielsweise u.a. die Aufgabe zurechnen, den Sturzverlauf beim Einfedern zu kontrollieren. Dabei hat im Prinzip jeder der vorstehenden diskutierten Lenker (5, 7, 9 und 11) einen mehr oder weniger ausgeprägten Einfluß auf diese Größen und damit letztendlich auf die jeweiligen fahrdynamischen Aspekte.

Die Abstützung der Radaufhängung (3, 3') erfolgt, wie dies aus Fig. 1 bis 4 ersichtlich ist, mittels der Feder (19) und dem Dämpfer (21). Die Feder (19) liegt auf einem im unteren Querlenker (7) integrierten Federteller (61) auf. Der Federteller (61) ist nahe der achsträgerseitigen Anlenkung (45) des unteren Querträgers (7) im unteren Querträger (7) angeordnet. Der obere Querlenker (5) verläuft vor dem von der Feder (19) eingenommenen Raum. Als Feder (19) wird eine zylindrische Feder mit linearer Federcharakteristik eingesetzt, wie vorstehend bereits diskutiert.

Wie ebenfalls bereits vorstehend angesprochen, ist der Hilfsrahmen (15) als Rohrrahmen aufgebaut oder wahlweise als Fahrschemel aus Blechprägeteilen integriert. Beide Ausführungsformen des Hilfsrahmens (15) sind so ausgelegt, dass ausreichend Bauraum für ein Differential zur Verfügung gestellt werden kann, welches sich in Fahrzeugrichtung unterhalb dem Hilfsrahmen (15) befindet. Vom hier nicht näher dargestellten Differential gelangt die Antriebskraft dann über die Antriebswellenabschnitte (27) beziehungsweise (27') zu den nicht näher dargestellten Hinterrädern.

Die vorstehend diskutierte Erfindung schafft somit eine Hinterradaufhängung für ein Personenkraftfahrzeug mit einem oberen und einem unteren Querlenker. Ferner weist die Hinterradaufhängung einen quer angeordneten Kompensationslenker und einen in Fahrtrichtung orientierten Längslenker für die Mehrfachanlenkung eines Hinterradträgers gegebenenfalls unter Zwischenschaltung eines Hilfsrahmens an der Fahrzeugkarosserie auf. Jeweils bezogen auf die Fahrtrichtung des Kraftfahrzeuges sind der untere Querlenker hinter der Radachse des Radträgers und der obere Querlenker in etwa oberhalb der Radachse vor dem unteren Querlenker angeordnet.

Weiterhin ist bei dieser Hinterradaufhängung eine Karosserieabstützung vorgesehen, die aus einer Feder und einem Dämpfer besteht, wobei die Feder am unteren Querlenker abgestützt ist. Ferner ist vorgesehen, dass der Kompensationslenker in Fahrtrichtung vor dem Dämpfer liegt, wobei die Querlenker und der Kompensationslenker an dem Hilfsrahmen angelenkt sind und wobei sie den Hilfsrahmen, vorzugsweise mit wenigstens vier Stützstellen gegen den Unterbau der Fahrzeugkarosserie abstützen.

Dabei wird erstmals vorgeschlagen, dass die Räder der Hinterachse in der Weise antreibbar sind, dass hierfür jeweils ein Hinterrad-Antriebswellenabschnitt ausgehend von einem Differential zwischen dem oberen und unteren Querlenker verlaufend zum jeweiligen Hinterrad führt, wobei der obere Querlenker oberhalb vor der Radachse liegt und wobei sich der Dämpfer gegen den unteren hinteren Querlenker abstützt.

### Bezugszeichenliste

- Hinterachse: 1
- Hinterradaufhängung: 3, 3'
- oberer Querlenker: 5
- unterer Querlenker: 7
- Kompensationslenker: 9
- Längslenker: 11
- Hinterradträger: 13, 13'
- Hilfsrahmen bzw. Fahrschemel: 15
- Radachse des Radträgers: 17
- Feder: 19
- Dämpfer: 21
- Stützstelle Hilfsrahmen gegen Unterbau: 23, 23'
- Stützstelle Hilfsrahmen gegen Unterbau: 25, 25'
- Antriebswellenabschnitt: 27, 27'
- A-bushing: 29
- unteres Befestigungsauge des Dämpfers: 31
- Puffer auf dem Dämpfer: 33
- hilfsrahmenseitige Anlenkung: 35
- Stabilisator: 37
- äusseres Ende des Stabilisator: 39, 39'
- Pendelstütze: 41, 41'
- Anlenkpunkt am Radträger: 43
- Anlenkpunkt am Radträger: 45
- Anlenkpunkt am Radträger: 47
- hilfsrahmenseitige Anlenkung: 49
- hilfsrahmenseitige Anlenkung: 51
- Befestigungspunkte am Radträger: 53 - 53''
- Schulter: 55
- Kugelgelenk: 57
- Dämpfungsbuchse: 59
- Federteller: 61

## Patentansprüche

1. Hinterradaufhängung (3, 3') für ein Personenkraftfahrzeug mit einem oberen Querlenker (5) und einem unteren Querlenker (7), einem quer angeordneten Kompensationslenker (9) und einem Längslenker (11) für die Mehrfachanlenkung eines Hinterradträgers (13, 13') unter Zwischenschaltung eines Hilfsrahmens (15), an einem Unterbau der Fahrzeugkarosserie, wobei, jeweils bezogen auf die Fahrtrichtung X des Personenkraftfahrzeuges, der untere Querlenker (7) hinter der Radachse (17) des Radträgers (13, 13') liegt, der obere Querlenker (5) in etwa oberhalb der Radachse (17) vor dem unteren Querlenker (7) liegt, und mit einer Karosserieabstützung, bestehend aus einer Feder (19) und einem Dämpfer (21), wobei die Feder (19) am unteren Querlenker (7) abgestützt ist, wobei der Kompensationslenker (9) in Fahrtrichtung X vor dem Dämpfer (21) liegt, und wobei die Querlenker (5, 7) und der Kompensationslenker (9) an dem Hilfsrahmen (15) angelenkt sind, wobei
die Räder der Hinterachse (1) in der Weise antreibbar sind, dass hierfür jeweils ein Hinterrad-Antriebswellenabschnitt (27, 27') ausgehend von einem Differential zwischen dem oberen und unteren Querlenker (5, 7) verlaufend zum jeweiligen Hinterrad führt, wobei sich der Dämpfer (21) gegen den unteren hinteren Querlenker (7) abstützt, **dadurch gekennzeichnet, dass** der obere Querlenter (5) oberhalb vor der Radachse (17) liegt.

2. Hinterradaufhängung nach Anspruch 1, **dadurch gekennzeichnet, dass** als Feder (19) eine zylindrische Feder mit linearer Federcharakteristik eingesetzt ist.

3. Hinterradaufhängung nach Anspruch 1 oder 2, **dadurch gekennzeichnet, dass** das untere Befestigungsauge (31) des Dämpfers (21) unmittelbar am unteren Querlenker (7) gelagert ist.

4. Hinterradaufhängung nach einem der Ansprüche 1 bis 3, **dadurch gekennzeichnet, dass** der Dämpfer (21) innerhalb der Feder (19) angeordnet ist.

5. Hinterradaufhängung nach einem der Ansprüche 1 bis 4, **dadurch gekennzeichnet, dass** ein Puffer (33) auf dem Dämpfer (21) angeordnet ist.

6. Hinterradaufhängung nach einem der Ansprüche 1 bis 5, **dadurch gekennzeichnet, dass** der Längslenker (11) im Bereich eines Unterbaubefestigungspunktes (25, 25') des Hilfsrahmens (15) gegen diesen abgestützt ist.

7. Hinterradaufhängung nach einem der Ansprüche 1 bis 6, **dadurch gekennzeichnet, dass** der Längslenker (11) über ein A-Bushing (29) am Hilfsrahmen (15) oder am Kraftfahrzeugunterbau angelenkt ist.

8. Hinterradaufhängung nach einem der Ansprüche 1 bis 7, **dadurch gekennzeichnet, dass** der Längslenker (11) als Rohrlängslenker ausgebildet ist.

9. Hinterradaufhängung nach einem der Ansprüche 1 bis 8, **dadurch gekennzeichnet, dass** die hilfsrahmenseitige Anlenkung (35) des Kompensationslenkers (9) unterhalb des vorderen Befestigungspunktes (25, 25') des Hilfsrahmens (15) liegt.

10. Hinterradaufhängung nach einem der Ansprüche 1 bis 9, **dadurch gekennzeichnet, dass** ein vor den oberen Querlenkern (5) und/oder in seinem mittleren Bereich vor den Kompensationslenkern (9) verlaufender Stabilisator (37) an seinen Enden (39, 39') jeweils mit dem oberen Querlenker (5) über Pendelstützen (41, 41') pendelnd verbunden ist.

11. Hinterradaufhängung nach einem der Ansprüche 1 bis 10, **dadurch gekennzeichnet, dass** der Hilfsrahmen (15) als Rohrrahmen aufgebaut ist.

12. Hinterradaufhängung nach einem der Ansprüche 1 bis 11, **dadurch gekennzeichnet, dass** sich der Hilfsrahmen (15) mit wenigstens vier Stützstellen (23, 23', 25, 25') gegen den Unterbau der Fahrzeugkarosserie abstützt.

13. Vierlenker-Hinterachse (1) mit angetriebenen Hinterrädern mit einer Hinterradaufhängung (3, 3') mit wenigstens einem der Merkmale nach den Ansprüchen 1 bis 12.

## Claims

1. Rear suspension (3, 3') for passenger vehicle with an upper transverse control arm (5) and a nether transverse control arm (7) and a transversally aligned compensation control arm (9) and a longitudinal control arm (11) for the multiple linkage of a rear wheel support (13, 13') by interconnection of an auxiliary frame (15) on the understructure of the car body, wherein the nether transverse control arm (7) is arranged behind the wheel axle (17) of the wheel support (13, 13') with respective reference to the driving direction X of the passenger motor vehicle, and the upper transverse control arm (5) is arranged approximately on the upper side of the wheel axle (17) in front of the nether transverse control arm (7) and with a car body support, consisting of a spring (19) and a damper (21), wherein the spring (19) is supported on the nether transverse control arm (7), wherein the compensation control arm (9) is arranged in front of the damper (21) with orientation towards the driving direction X, and wherein the transverse control arms (5, 7) and the compensation control arm (9) are driven towards the auxiliary frame (15), wherein the wheels of the rear axle (1) are drivable so that a respective rear wheel section of the axle driving shaft (27, 27') leads to the respective rear wheel by starting from a differential between the upper and the nether transverse control arm (5, 7), wherein the damper (21) is supported by the nether read transverse control arm (7), **characterized in that** the upper transverse control arm (5) is arranged on the upper side in front of the wheel axle (17).

2. Rear suspension according to claim 1, **characterized in that** as spring (19) a cylindrical spring having a linear spring characteristic is used.

3. Rear suspension according to the claims 1 and 2,
**characterized in that** the nether fixing eyelet (31) of the damper (21) is supported next to the nether transverse control arm (7).

4. Rear suspension according to one of the claims 1 to 3, **characterized in that** the damper (21) is arranged inside the spring (19).

5. Rear suspension according to one of the claims 1 to 4, **characterized in that** a buffer (33) is arranged on the damper (21).

6. Rear suspension according to one of the claims 1 to 5, **characterized in that** the longitudinal control arm (11) is supported in the area of the understructure fastening point (25, 25') of the auxiliary frame (15) against it.

7. Rear suspension according to one of the claims 1 to 6, **characterized in that** the longitudinal control arm (11) is driven through an A-bushing (29) on the auxiliary frame (15) or on the understructure of the motor vehicle.

8. Rear suspension according to one of the claims 1 to 7, **characterized in that** the longitudinal control arm (11) is designed as tubular longitudinal control arm.

9. Rear suspension according to one of the claims 1 to 8, **characterized in that** the linkage (35) of the compensation control (9) on the side of the auxiliary frame is arranged under the frontal fastening point (25, 25') of the auxiliary frame (15).

10. Rear suspension according to one of the claims 1 to 9, **characterized in that** one of the upper transverse control arms (5) and/or a stabilizer (37) running in its intermediate area in front of the compensation control arms (9) is respectively oscillating connected on its extremities (39, 39') with the upper transverse control arm (5) by stabilizer links (41, 41').

11. Rear suspension according to one of the claims 1 to 10, **characterized in that** the auxiliary frame (15) is structured as tubular frame.

12. Rear suspension according to one of the claims 1 o 11, **characterized in that** the auxiliary frame (15) is support against the understructure of the car body by at least four base points (23, 23', 25, 25').

13. Quadruple control arm rear axle (1) equipped with powered rear wheels with a rear suspension (3, 3'), having at least one of the characteristics according to the claims 1 to 12.

## Revendications

1. Suspension des roues arrière (3, 3') pour un véhicule de transport des personnes avec un guidon transversal (5) supérieur et un guidon transversal inférieur (7), un guidon à compensation placé à la transversale (9) et un guidon longitudinal (11) pour la multiple direction de l'essieu porteur des roues arrière (13, 13') sous changement de vitesse à intervalle bien défini d'un châssis auxiliaire (15), à la construction inférieure de la carrosserie du véhicule, tenant compte chaque fois du sens de destination X du véhicule transportant les personnes, dont le guidon transversal inférieur (7) se situe sous l'axe des roues (17) de l'essieu porteur des roues arrière (13, 13'), le guidon transversal supérieur (5) se situe presque au-dessus de l'axe des roues (17) devant le guidon transversal inférieur (7), et avec un appui de la carrosserie, composée d'un ressort (19) et un amortisseur (21); le ressort (19) s'appuie sur le guidon transversal inférieur (7), d'où le guidon à compensation (9) est placé dans le sens de destination X devant l'amortisseur (21), les guidons transversaux (5,7) et le guidon à compensation (9) s'orientent sur le châssis auxiliaire (15); d'où les roues de l'axe inférieur (1) sont propulsables de telle manière que la partie de l'arbre à propulsion des roues arrière (27, 27') dégage une différentielle entre le guidon transversal supérieur et inférieur (5, 7) suivant respectivement la direction des roues arrière; d'où l'amortisseur (21) s'appuie contre le guidon transversal inférieur (7), cela caractérise le fait que le guidon transversal supérieur (5) se place au-dessus de l'axe des roues.

2. Suspension des roues arrière selon la revendication 1, **caractérisée en ce que** le ressort (19) utilisé est un ressort cylindrique possédant les caractéristiques d'un ressort linéaire.

3. Suspension des roues arrière selon revendication 1 ou 2, **caractérisée en ce que** la partie inférieure de l'amortisseur (21) repose directement sur le guidon transversal inférieur (7).

4. Suspension des roues arrière selon les revendications 1 à 3, **caractérisée en ce que** l'amortisseur (21) est placé dans le ressort (19).

5. Suspension des roues arrière selon les revendications 1 à 4, **caractérisée en ce qu'**un tampon (33) est placé sur l'amortisseur (21).

6. Suspension des roues arrière selon les revendications 1 à 5, **caractérisée en ce que** le guidon longitudinal (11) s'appuie dans la zone d'un point de fixation de la structure inférieure (25,25') du châssis auxiliaire (15).

7. Suspension des roues arrière selon les revendications 1 à 6, **caractérisée en ce que** le guidon longitudinal (11) est dirigé à travers un A-bushing (29) sur le châssis auxiliaire (15).

8. Suspension des roues arrière selon les revendications 1 à 7, **caractérisée en ce que** le guidon longitudinal (11) est constitué comme guidon longitudinal en tuyau.

9. Suspension des roues arrière selon les revendications 1 à 8, **caractérisée en ce que** la direction prise du côté du châssis auxiliaire (35) par le guidon à compensation (9) se place en dessous du point de fixation avant (25, 25').

10. Suspension des roues arrière selon les revendications 1 à 9, **caractérisée en ce que** un stabilisateur en cours (37) devant le guidon transversal supérieur (5) et/ou sa zone médiane devant le guidon à compensation (9), puisse à son bout (39, 39') être combiné à une oscillation respectivement avec le guidon transversal supérieur (5) à travers les étais d'oscillation (41, 41').

11. Suspension des roues arrière selon les revendications 1 à 10, **caractérisée en ce que** le châssis auxiliaire (15) est monté comme un châssis en tuyau.

12. Suspension des roues arrière selon les revendications 1 à 11, **caractérisée en ce que** le châssis auxiliaire (15) avec au moins quatre étais (23, 23', 25, 25') s'appuie contre la partie inférieure de la carrosserie du véhicule.

13. Un axe arrière à quatre guidons (1) avec des roues arrières à propulsion avec une suspension des roues arrière (3, 3') avec au moins une des caractéristiques selon les revendications 1 à 12.
